# EUROPEAN PATENT APPLICATION

(11) **EP 2 367 045 A1**
(43) Date of publication of application: **21.09.2011**
(21) Application number: 10191053.7
(22) Date of filing: 12.11.2010
(51) Int. Cl.: G02B 27/09, G02B 17/08, F21V 5/04, F21V 7/00, F21V 13/04

(54) **Lens**

(30) Priority: 16.03.2010 TW 99107625; 22.08.2010 US 375860 P
(71) Applicant: Cal-Comp Electronics & Communications Company Ltd., Taipei County 222 (TW); Kinpo Electronics, Inc., Taipei County 222 (TW)
(72) Inventor: Hsueh, Han-Tsung, Wanshun Village, Shenkeng Township, Taipei County 222 (TW); Feng, Jia-Chyi, Wanshun Village, Shenkeng Township, Taipei County 222 (TW)
(74) Representative: 2K Patentanwälte Blasberg Kewitz & Reichel

(57) **Abstract**

A lens with a light emitting diode light source disposed therein is provided. The lens includes a central axis, a first surface and a second surface, wherein the first surface surrounds the central axis symmetrically, and the second surface is located inner of the first surface and formed an accommodating space adapted to dispose the light emitting diode light source therein.

## Description

### BACKGROUND OF THE INVENTION

### Field of the Invention

The invention relates to a lens and more particularly to a lens with a simply constructed and low-cost.

### Description of Related Art

Having advantages such as compact volume and long lifespan, a light emitting diode (LED) light source has become a commonly adopted light source in daily life.

In the application of the conventional LED light source, as the LED light source is a light source with directivity, a directly illuminated region located in front of the LED light source usually has a higher illumination level and the illumination level of the non-directly illuminated region is lower than that of the directly illuminated region. Due to the directivity of the LED light source, the LED light source is mostly adopted in lamps requiring partial high illumination instead of in decorative illumination.

### SUMMARY OF THE INVENTION

The invention is directed to a simply constructed and low-cost lens.

The invention is directed to a lens, wherein a light emitting diode light source is adapted to be disposed therein. The lens comprises a central axis, a first surface and a second surface, wherein the first surface surrounds the central axis symmetrically, and the second surface is located inner of the first surface and formed an accommodating space adapted to dispose the light emitting diode light source therein.

In one embodiment of the lens of the invention, the lens further comprises a third surface located above the second surface and surrounded by the first surface.

In one embodiment of the lens of the invention, the first surface and the third surface are concave surfaces, the second surface comprises a first subsurface and a second subsurafce, the first subsurface has a center where the central axis passing through, and the second subsurface surrounds first subsurface symmetrically as if the central axis serving an axle to conformally form the accommodating space.

In one embodiment of the lens of the invention, the first surface has a refractive portion and a total reflective portion, the refractive portion is relatively close to the second surface and the total reflective portion is relatively close to the third surface.

In one embodiment of the lens of the invention, the third surface is a plane, the second surface has a first subsurface, a second subsurface and a third subsurface conformally form the accommodating space, the second subsurface surrounds outer of the first subsurface and the third subsurface surrounds outer of the second subsurface, wherein the first subsurface is a concave surface, and the second subsurface surrounding the first subsurface is a flat plane or an inclined plane. Further, the first surface has a fourth subsurface and a fifth subsurface, the fourth subsurface is close to and surrounds the third surface while the fifth subsurface is close to the second surface.

In one embodiment of the lens of the invention, the lens further comprises an umbrella-shaped body disposed above the first surface and having a third surface and a fourth surface surrounding the central axis symmetrically, wherein the third and the fourth surfaces are located on a top portion of the umbrella-shaped body and connect with each other. In addition, on a projection plane with the central axis serving as a normal, an orthogonal projection of the third surface onto the projection plane is surrounded by an orthogonal projection of the fourth surface onto the projection plane. The third surface is a convex surface or a concave surface, and the fourth surface is a convex surface or a concave surface.

In one embodiment of the lens of the invention, a portion of a light emitted to the third surface transmits through the third surface, and another portion of the light emitted to the third surface is reflected by the third surface towards a side edge of the umbrella-shaped body.

In one embodiment of the lens of the invention, a portion of a light emitted to the fourth surface transmits through the fourth surface, and another portion of the light emitted to the fourth surface is reflected by the fourth surface towards a side edge of the umbrella-shaped body.

In one embodiment of the lens of the invention, the umbrella-shaped body further comprises a first slanted surface and a second slanted surface surrounding the central axis symmetrically and respectively located at a side edge of the umbrella-shaped body, the first slanted surface located next to the fourth surface, the second slanted surface located between the first slanted surface and the first surface, and the first slanted surface intersects with the second slanted surface to form an included angle.

In one embodiment of the lens of the invention, the umbrella-shaped body further comprises a third slanted surface surrounding the central axis symmetrically and located on a bottom portion of the umbrella-shaped body, and the third slanted surface and the projection plane form an acute angle of 0 degree to 15 degrees.

In one embodiment of the lens of the invention, the second surface is dome-like.

In one embodiment of the lens of the invention, at least one of the first surface and the second surface further has a micro-structure configured to adjust a path of light. In one embodiment of the lens of the invention, the lens further comprises a plurality of fixing portions connected to a bottom edge of the first surface.

In light of the foregoing, the lens of the invention is simply constructed and has low cost. By applying the lens in lamps, the light path of the LED light source can be changed, so that the LED light source can also be adopted in decorative lamps.

In order to make the aforementioned and other features and advantages of the invention more comprehensible, several embodiments accompanied with figures are described in detail below.

### BRIEF DESCRIPTION OF THE DRAWINGS

The accompanying drawings are included to provide further understanding, and are incorporated in and constitute a part of this specification. The drawings illustrate exemplary embodiments and, together with the description, serve to explain the principles of the disclosure.

Figs. 1 and 2 are schematic diagrams of a lens from different viewing angles according to a first embodiment of the invention.

Fig. 3 is a cross-sectional diagram of the lens in Fig. 1 taken along line A-A.

Fig. 4 is a schematic diagram of a lamp adopting the lens in Fig. 1.

Figs. 5 to 7 are schematic diagrams showing an adjustment of a light emitted by a light emitting diode light source through the lens.

Fig. 8 is an illumination distribution diagram of the lamp after normalizing different illumination standards.

Fig. 9 is a schematic diagram of the lens having a plurality of fixing portions.

Fig. 10 is a schematic diagram of a lens having a plurality of fixing portions according to another modification.

FIG. 11 and FIG. 12 are schematic views illustrating a lens at different viewing angles according to a second embodiment of the invention.

FIG. 13 is a schematic cross-sectional view taken along a sectional line B-B in the lens depicted in FIG. 11.

FIG. 14 illustrates light traces of the lens in the second embodiment when the LED light source of the lamp depicted in FIG. 4 emits light.

FIG. 15 is a polar radiation view illustrating the beam shape when the lens depicted in FIG. 11 is made of polycarbonate (PC).

FIG. 16 is a cross-sectional view illustrating the beam shape when the lens is made of PC.

FIG. 17 is a polar radiation view illustrating the beam shape when the lamp has the lens that is made of polymethyl methacrylate (PMMA).

FIG. 18 is cross-sectional view illustrating the beam shape when the lamp has the lens that is made of PMMA.

FIG. 19 is a schematic view illustrating the LED light source on which a light source lens is further configured.

FIG. 20 is a cross-sectional view illustrating a lens according to a third embodiment of the invention.

FIG. 21 is a schematic view illustrating light traces of the LED light source and the lens depicted in FIG. 20.

FIG. 22 is a polar radiation view illustrating the beam shape when the lens depicted in FIG. 20 is made of PC.

FIG. 23 is a cross-sectional view illustrating the beam shape when the lens depicted in FIG. 20 is made of PC.

FIG. 24 is a polar radiation view illustrating the beam shape when the lamp has the lens that is made of PMMA.

FIG. 25 is cross-sectional view illustrating the beam shape when the lamp has the lens that is made of PMMA.

FIG. 26 and FIG. 27 are three-dimensional perspective views from different viewing angles of a lens in accordance with a fourth embodiment of the invention.

FIG. 28 and FIG. 29 are three-dimensional perspective views from different viewing angles of a lens in accordance with another modification of the invention.

FIG. 30 is a side view of the lens depicted in FIG. 26.

FIG. 31 is a schematic diagram illustrating a light path of a light source in the lens depicted in FIG. 26.

FIGs. 32 to 34 are schematic diagrams respectively illustrating different portions of the light path depicted in FIG. 31.

FIG. 35 is an illuminance distribution diagram generated by a light source through the lens depicted in FIG. 31.

### DESCRIPTION OF EMBODIMENTS

### [FIRST EMBODIMENT]

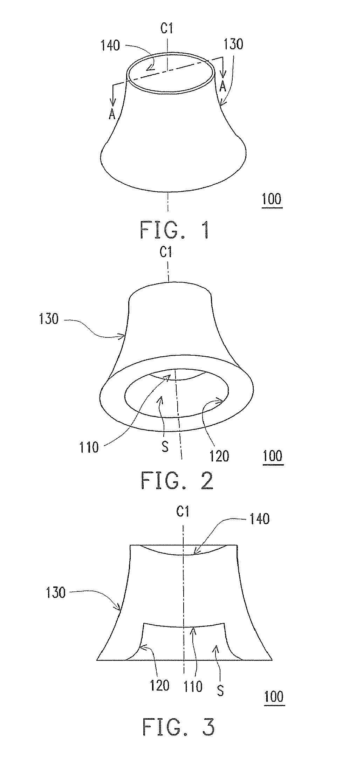

Figs. 1 and 2 are schematic diagrams of a lens from different viewing angles according to an embodiment of the invention. Fig. 3 is a cross-sectional diagram of the lens in Fig. 1 taken along line A-A. Referring to Figs. 1, 2, and 3, a lens 100 of the present embodiment has a first surface 110, a second surface 120, a third surface 130, and a fourth surface 140. The second surface 120 surrounds the first surface 110 to form an accommodating space S conformally. The third surface 130 surrounds the fourth surface 140 and is located on an outer side of the second surface 120. The first surface 110 is located between the accommodating space S and the fourth surface 140.

Accordingly, the first surface 110 and the second surface 120 of the lens 100 are convex surfaces, and the third surface 130 and the fourth surface 140 are concave surfaces in the present embodiment.

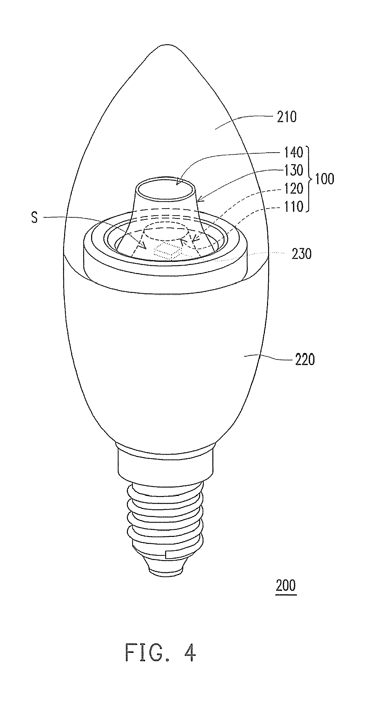

Fig. 4 is a schematic diagram of a lamp adopting the lens in Fig. 1. Referring to Figs. 2, 3, and 4, the lens 100 is applied in a decorative lamp 200. The lamp 200 includes a lampshade 210, a base 220, a lens 100, and a light emitting diode (LED) light source 230. The lampshade 210 is assembled to the base 220. The lampshade 210 can be of any shape depending on the demand of the decorative lamp 200. The lens 100 is disposed on the base 220 and located in the lampshade 210. The LED light source 230 is located in the accommodating space S of the lens 100.

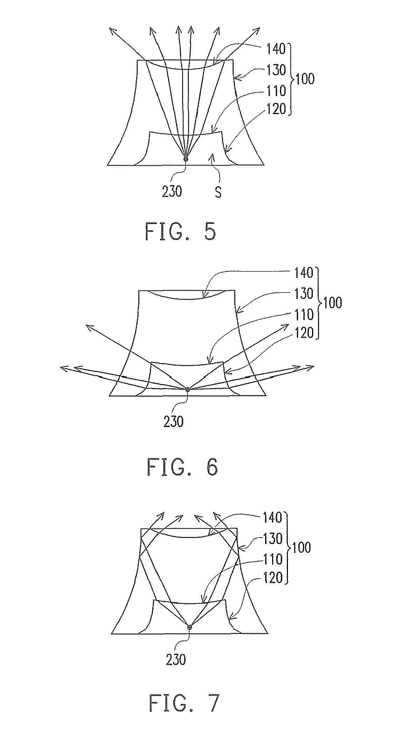

Figs. 5 to 7 are schematic diagrams showing an adjustment of a light emitted by a light emitting diode light source through the lens. For better illustration, Figs. 5-7 merely show the LED light source 230, the lens 110, and a light path of the LED light source 230 after being adjusted through the lens 100. Referring to Fig. 5, a light emitted by the LED light source 230 disposed in the accommodating space S of the lens 100 facing the first surface 110 is limited by the directivity of the LED light source 230, and thus has a narrow visible range. However, the first surface 110 of the lens 100 is neither planar nor inclined. The first surface 110 is a surface with curvature, such that the light emitted from the LED light source 230 enters the lens 100 through the first surface 110, and the light is refracted by the curvature of the first surface 110 so as to increase the visible range of the light. Moreover, the light entering the lens 100 through the first surface 110 is emitted due to the refraction through the curved fourth surface 140. Consequently, the visible range of the light emitted by the LED light source 230 is further widened.

Referring to Fig. 6, the light emitted by the LED light source 230 facing the second surface 120 is refracted by the curved second surface 120. The light is then emitted out of the lens 100 through the curved third surface 130. Notably, the light refracted from the second surface 120 is emitted from a lower portion of the third surface 130.

Referring to Fig. 7, the light having a larger angle and emitted from the LED light source 230 enters the lens 100 from the first surface 110, and is emitted to a higher portion of the third surface 130. At this time, a total reflection occurs and the light is reflected and emitted from the fourth surface 140. Accordingly, the easily refracted lower portion of the third surface 130 relatively close to the first surface 110 is referred as a refractive portion, and the easily total reflected higher portion of the third surface 130 relatively close to the fourth surface 140 is referred as a total reflective portion. Here, the refractive portion and the total reflective portion are generally divided. Each of the refractive portions and the total reflective portions used in the lens 100 of the lamp 200 can be changed according to a location of the LED light source 230 disposed in the accommodating space S.

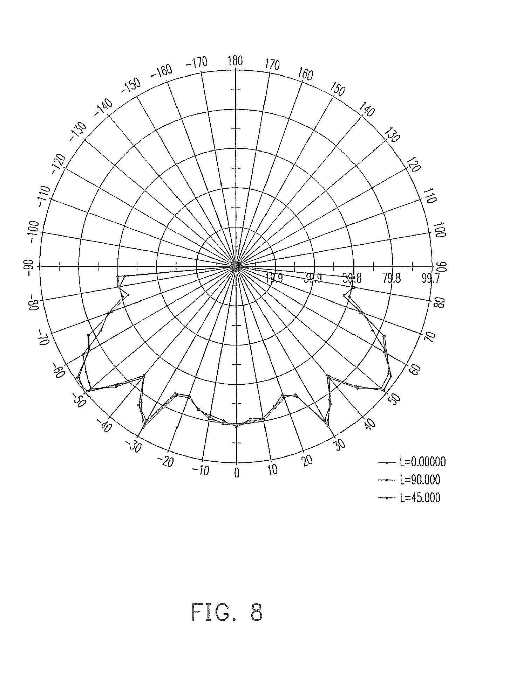

Fig. 8 is an illumination distribution diagram of the lamp after normalizing different illumination standards. As shown in Fig. 8, the lens 100 is adopted in lamp 200, so that a visible angle range of the lamp 200 is approximately from -85° to +85°. That is, the lamp 200 has a visible angle range of 170°. In addition, the lamp 200 has uniform illumination within the visible angle range, such that the non-uniform illumination of conventional decorative lamps applying the LED light source 230 having directivity is adjusted.

Further, a micro-structure (not shown) is formed on at least one of the third surface 130 and the fourth surface 140. The disposition of the micro-structure facilitates in adjusting the path of light so as to avoid glare.

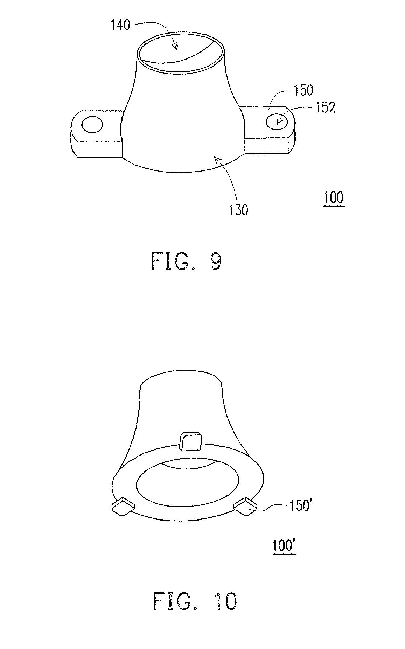

Fig. 9 is a schematic diagram of a lens having a plurality of fixing portions. Referring to Figs. 4 and 9, in order to dispose the lens 100 firmly on the base 220, the lens 100 further includes a fixing portion 150 connected to a bottom edge of the third surface 130. The lamp 200 further includes a plurality of fasteners (not shown) such as screws, and the fasteners are fastened into the base 220 through the fixing portion 150 so as to fix the lens 100 on the base 220. Each fixing portion 150 has an opening 152, and the fastener is fastened into the base 220 through the opening 152.

In another modification, a fixing portion 150' lacks the opening 152 (as depicted in Fig. 10), and a lens 100' is disposed on the base 220 through the fixing portion 150'. Herein, the fixing portion 150' and the base 220 have an adhesive layer therebetween for fixing the lens 100' on the base 220. The present embodiment does not limit the manner of fixing the fixing portion 150 on the base 220. In other modifications not illustrated, a plurality of latches (not shown) is disposed on the base 220. The lens 100 is fixed to the base 220 by screwing the fixing portion 150 to a space between the latches and a surface of the base 220.

In summary, the lens of the invention has a simple structure and is easily fabricated, and thus has low fabrication cost. Furthermore, by adopting the lens with the LED light source having directivity, the visible angle range of the LED light source is enlarged, so that the LED light source can also be applied in decorative lamps to further widen the application scope of the LED light source.

### [SECOND EMBODIMENT]

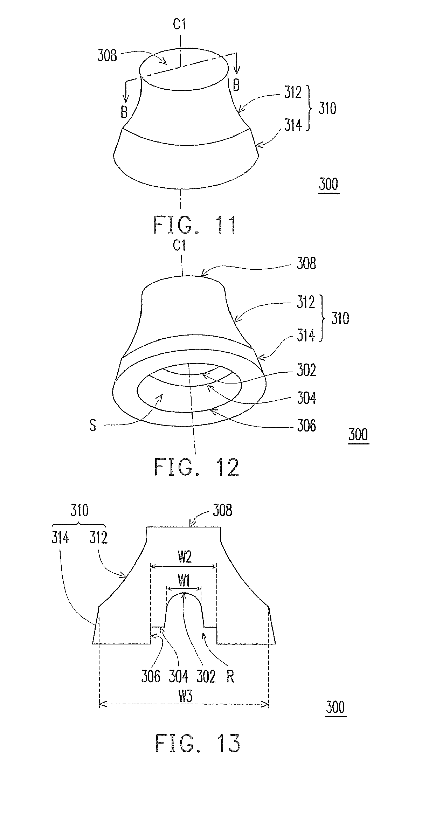

FIG. 11 and FIG. 12 are schematic views illustrating a lens at different viewing angles according to a second embodiment of the invention. FIG. 13 is a schematic cross-sectional view taken along a sectional line B-B in the lens depicted in FIG. 11. With reference to FIG. 11, FIG. 12, and FIG. 13, the lens 300 of this embodiment has a curved light incident surface 302, a first light incident surface 304, a first light emitting surface 308, and a second light emitting surface 310. The first light incident surface 304 surrounds the curved light incident surface 302, and the curved light incident surface 302 and the first light incident surface 304 together constitute an accommodation space S. The first light emitting surface 308 is located above the curved light incident surface 302. The second light emitting surface 310 is located at an outer side of the lens 300 and corresponds to the first light incident surface 304 located at an inner side of the lens 300. Besides, the second light emitting surface 310 surrounds the first light emitting surface 308.

As shown in the cross-sectional view of FIG. 13, the curved light incident surface 302 is a curved concave in the lens 300, and the first light incident surface 304 is a plane. The lens 300 further has an auxiliary surface 306 that surrounds the first light incident surface 304. The auxiliary surface 306 surrounds a circumference of the first light incident surface 304. A diameter W1 of the curved light incident surface 302 is an inner diameter of the first light incident surface 304, and a diameter W2 of the auxiliary surface 306 is an outer diameter of the first light incident surface 304. The outer diameter W2 is greater than the inner diameter W1.

The second light emitting surface 310 has a first subsurface 312 and a second subsurface 314, and an inner diameter W3 of the second subsurface 314 is equal to an outer diameter of the first subsurface 312. As shown in the cross-sectional view of FIG. 13, the first subsurface 312 of the second light incident surface 310 is a curved concave in the lens 300, and the second subsurface 314 is an inclined plane according to this embodiment.

With reference to FIG. 4, FIG. 12, and FIG. 13, the lens 300 is applied to a decorative lamp 200. The lamp 200 includes a lampshade 210, a base 220, the aforesaid lens 300, and an LED light source 230. The base 220 is assembled to the lampshade 210. The lampshade 210 can be in any shape, which is determined based on the requirements of the decorative lamp 200. The lens 300 is configured on the base 220 and located in the lampshade 210. The LED light source 230 is placed into the accommodation space R of the lens 300 through an opening formed by the auxiliary surface 306.

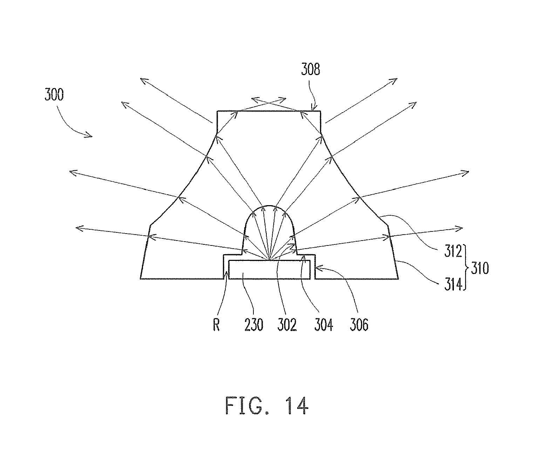

FIG. 14 illustrates light traces of the lens when the LED light source of the lamp depicted in FIG. 11 emits light. With reference to FIG. 14, when the LED light source 230 emits light, the light enters the lens 300 from the curved light incident surface 302. The radian of the curved light incident surface 302 is conducive to light refraction, such that the viewing angle of the lamp 200 can be enlarged when the light emitted by directional LED light source 230 is refracted by the curved light incident surface 302. The light refracted by the curved light incident surface 302 is further refracted by the second light incident surface 310 and then emitted out of the lens 300. Note that a portion of the light is refracted to the first subsurface 312 of the second light emitting surface 310 close to the first light emitting surface 308. The portion of the light is then completely reflected and emitted out from the first light emitting surface 308. Thereby, the light with uniform luminance can be emitted from the top of the lens 300.

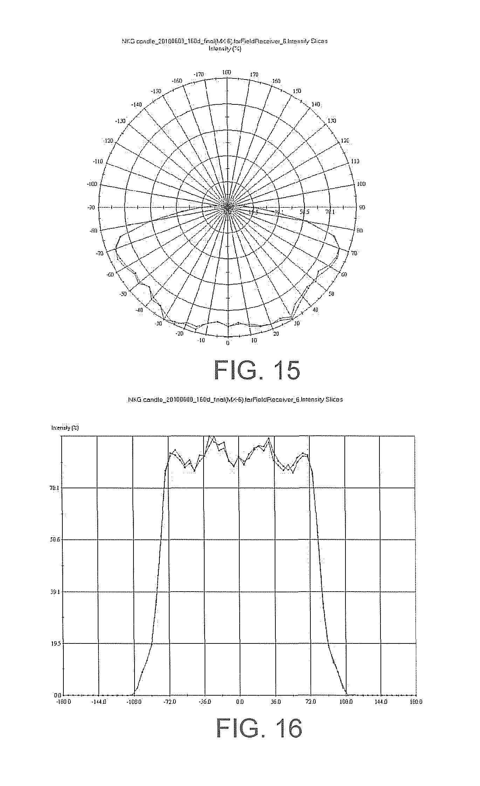

FIG. 15 is a polar radiation view illustrating the beam shape when the lens in FIG. 11 is made of polycarbonate (PC). FIG. 16 is a cross-sectional view illustrating the beam shape when the lamp is applied. It can be observed from FIG. 15 and FIG. 16 that the viewing angle of the lamp 200 ranges from about 85 degrees to about -85 degrees. Namely, the range of the viewing angle of the lamp 200 is about 170 degrees in total. Within the range of the viewing angle of the lamp 200, the light is concentrated in the front, and the luminance is uniform.

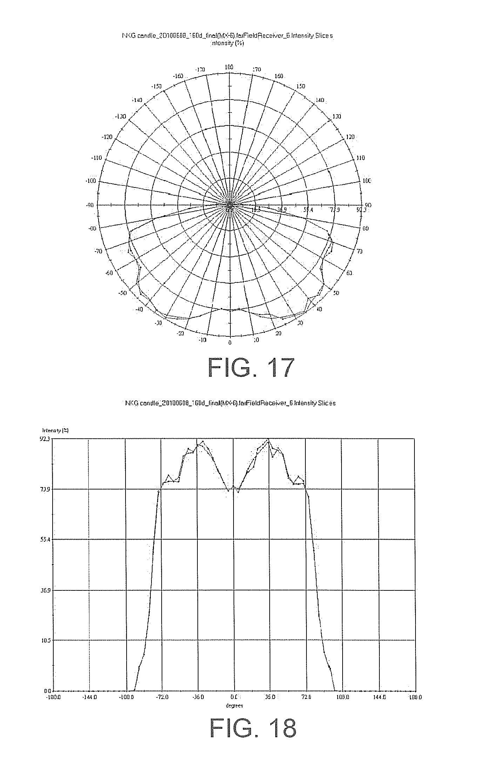

Note that the beam shape is subject to the material of the lens 300 in the lamp 200. In FIG. 15 and FIG. 16, the lens 300 is made of PC. FIG. 17 is a polar radiation view illustrating the beam shape when the lamp has the lens that is made of PMMA. FIG. 18 is cross-sectional view illustrating the beam shape when the lamp has the lens that is made of PMMA. In comparison with FIG. 15, FIG. 16 and FIG. 17, FIG. 18, the difference in the material of the lens poses an impact on the beam shape and uniformity of luminance. In view of the above, the material of the lens can be determined based on actual requirements in order to obtain the desirable beam shape and achieve favorable uniformity of luminance.

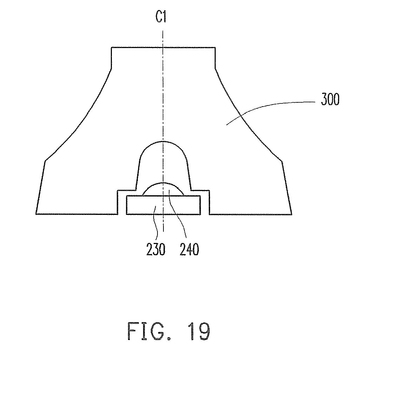

FIG. 19 is a schematic view illustrating the LED light source on which a light source lens is configured. With reference to FIG. 19, the lamp 200 (shown in FIG. 4) can further include a light source lens 240 configured on the LED light source 230 and located between the LED light source 230 and the lens 300. The light source lens 240 in the lamp 200 can optimize the beam shape and uniformize the luminance.

### [THIRD EMBODIMENT]

This embodiment is similar to the second embodiment. The difference therebetween lies in that the shape of the lens is slightly modified in this embodiment, and the decorative lamp of this embodiment can still have the wide viewing angle, favorable beam shape, and uniform luminance in comparison with the conventional decorative lamp.

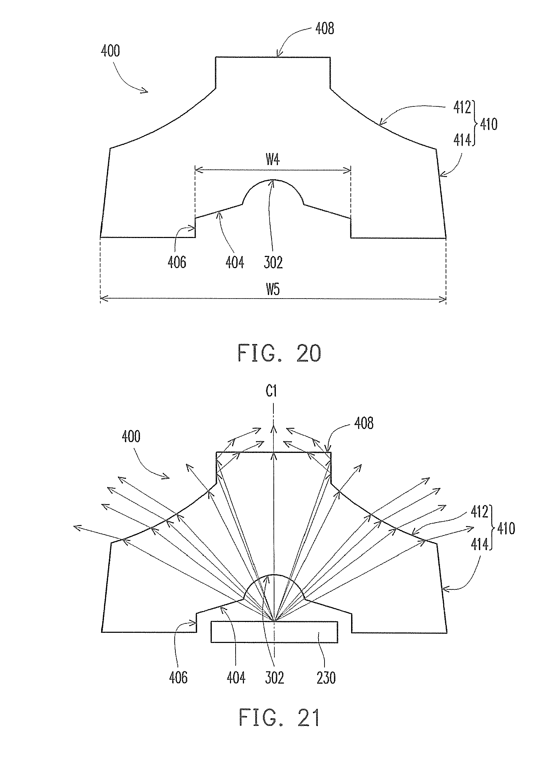

FIG. 20 is a cross-sectional view illustrating a lens according to a third embodiment of the invention. FIG. 21 is a schematic view illustrating light traces of the LED light source and the lens depicted in FIG. 20. Please refer to FIG. 20 and FIG. 21. It is shown in the cross-sectional view of FIG. 20 that the first light incident surface 404 of the lens 400 of this embodiment is an inclined surface, which is different from that of the second embodiment. Besides, the diameter of the auxiliary surface 406 is the outer diameter W4 of the first light incident surface 404, and the auxiliary surface 406 is a circumferential surface of the first light incident surface 404.

The diameter W5 of the second subsurface 414 of the second light emitting surface 410 is equal to the outer diameter of the first subsurface 412. As shown in the cross-sectional view of FIG. 20, the first subsurface 412 is a curved concave, and the second subsurface 414 is a plane.

It can be learned from FIG. 21 that the light emitted from the LED light source 230 enters the lens 400 through the curved light incident surface 102 and the first light incident surface 404. After the light is refracted by the curved light incident surface 102 and the first light incident surface 404, the light is refracted by the second light emitting surface 410 and then emitted out of the lens 400. Additionally, the light that is refracted by the curved light incident surface 102 to the first subsurface 412 of the second light emitting surface 410 close to the first light emitting surface 408 is completely reflected and then emitted from the first light emitting surface 408.

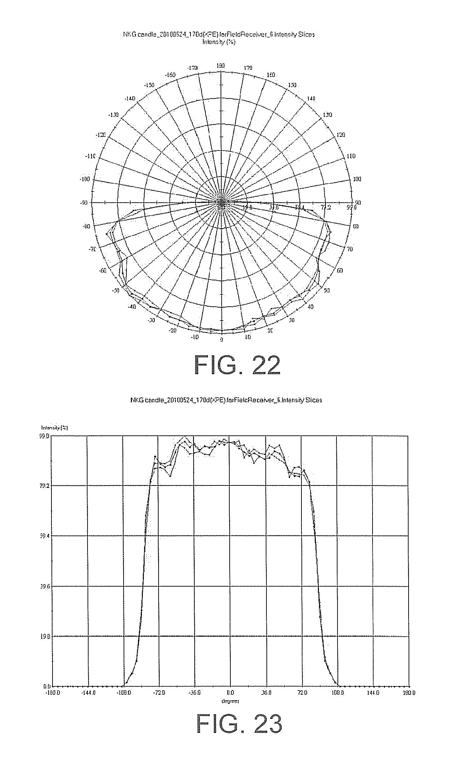

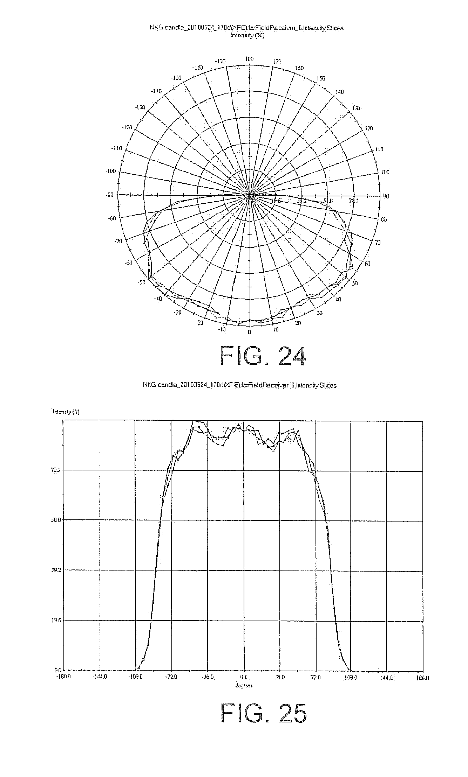

FIG. 22 is a polar radiation view illustrating the beam shape when a lamp having the lens depicted in FIG. 20 is applied. FIG. 23 is a cross-sectional view illustrating the beam shape when a lamp having the lens depicted in FIG. 20 is applied. With reference to FIG. 22 and FIG. 23, the material of the lens 400 as shown in FIG. 22 and FIG. 23 is the same as the material of the lens as shown in FIG. 15 and FIG. 16, i.e., the lens 400 depicted in FIG. 22 and FIG. 23 is made of PC as well. In comparison with the lamp described in the second embodiment, the lamp having the lens 400 of this embodiment has relatively uniform luminance within the range of the viewing angle. FIG. 24 is a polar radiation view illustrating the beam shape when the lamp has the lens that is made of PMMA. FIG. 25 is cross-sectional view illustrating the beam shape when the lamp has the lens that is made of PMMA. In comparison with the lamp described in the second embodiment and shown in FIG. 17 and FIG. 18, the lamp having the lens 400 described in this embodiment and shown in FIG. 24 and FIG. 25 has relatively uniform luminance within the range of the viewing angle, and the light with relatively uniform luminance can be emitted from the top of the lamp 200 (shown in FIG. 4).

The first light incident surface described in the first and the second embodiments is an inclined surface or a plane, for instance. However, people having ordinary skill in the art are able to modify the shape of the lens of the invention, so as to satisfy the requirement for wide viewing angle, favorable beam shape, and desirable luminance. For instance, the first light incident surface can be the curved concave.

In the second embodiment and the third embodiment, the concave stands for curving toward the inside of the lens, and the convex stands for bulging toward the outside of the lens. However, people having ordinary skill in the art are aware that the concave and the convex are relative terms in the above embodiments and should not be construed as limitations to the descriptions in the embodiments or to the drawings.

In light of the foregoing, the lens of the invention has the simple look and is easy to make, and thus the manufacturing costs of the lens are rather low. Moreover, when the lens and the directional LED light source are both applied, the range of the viewing angle of the LED light source can be enlarged. As such, the LED light source can be used in the decorative lamp and can be extensively applied.

### [FOURTH EMBODIMENT]

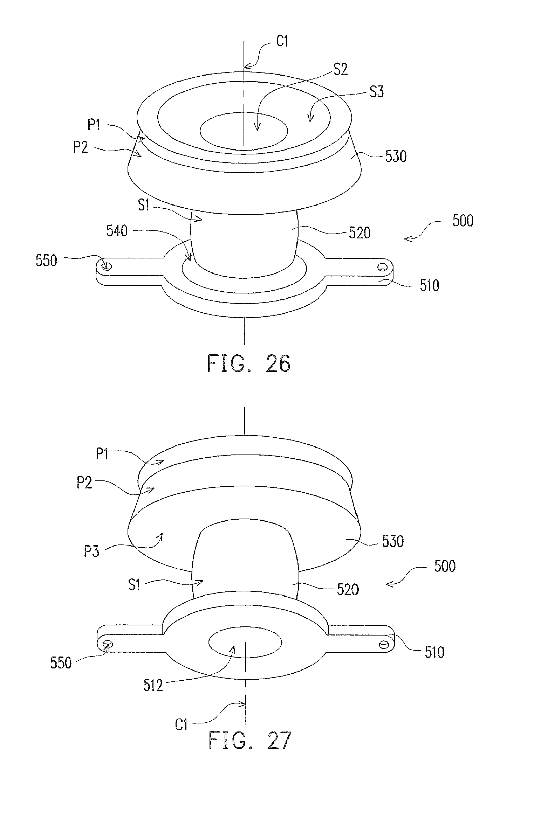

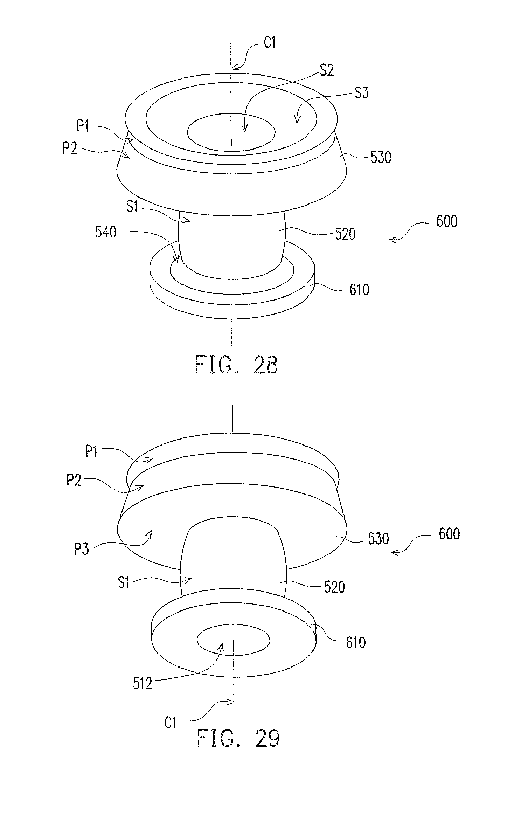

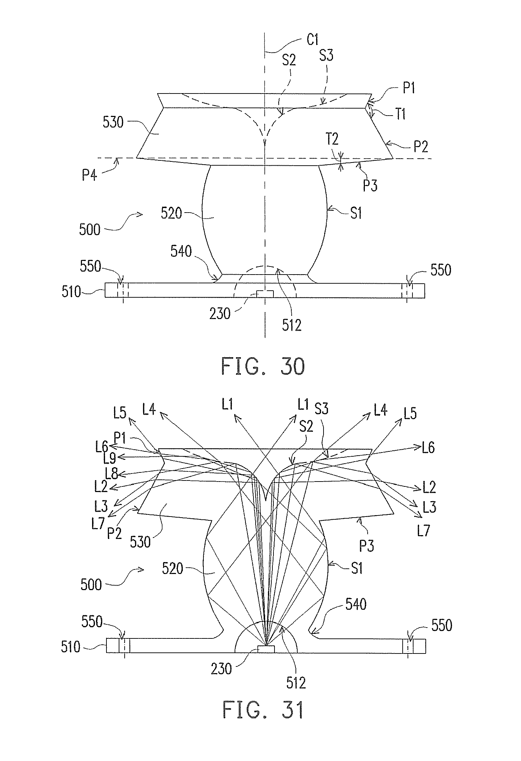

FIG. 26 and FIG. 27 are three-dimensional perspective views from different viewing angles of a lens in accordance with a fourth embodiment of the invention. FIG. 28 and FIG. 29 are three-dimensional perspective views from different viewing angles of a lens in accordance with another modification of the invention. FIG. 30 is a side view of the lens depicted in FIG. 26. Referring concurrently to FIGs. 26-30, a lens 500 is adapted for guiding a light from a light source 230 to a plurality of directions. In the present embodiment, the lens 500 includes a base 510, a pillar 520, and an umbrella-shaped body 530. The base 510 has a accommodating space 512 adapted to contain the LED light source 230. In other modification, any directional light source may be applied in the present embodiment.

The pillar 520 is connected to the base 510. The pillar 520 has a central axis C1 and a first curved surface S1, in which the first curved surface S1 surrounds the central axis C1 symmetrically. The umbrella-shaped body 530 is connected to the pillar 520. The umbrella-shaped body 530 has a third surface S2, a fourth surface S3, a slanted surface P1, and a second slanted surface P2 surrounding the central axis C1 symmetrically. The third surface S2 and the fourth surface S3 are located on a top portion of the umbrella-shaped body 530 and next to each other. The first slanted surface P1 and the second slanted surface P2 are located on a side edge of the umbrella-shaped body 530, and the first slanted surface P1 intersects the second slanted surface P2 to form an included angle T1.

In light of the foregoing description, by using the lens 500 according to an embodiment of the invention, a light emitted by the light source 230 can be guided from the base 510 to umbrella-shaped body 530, and the light is emitted from each of the optical surfaces S2, S3, P1, and P2 out of the lens 500. Therefore, according to an embodiment of the invention, the lens 500 can generate a light emission effect of greater than 180 degrees viewing range.

However, the present embodiment does not restrict the included angle T1 between the first slanted surface P1 and the second slanted surface P2. In another modification of the invention (not illustrated), the included angle T1 may also be 180 degrees. In other words, the first slanted surface P1 may be co-planar with the second slanted surface P2, and the lens 500 can still achieve the light emission effect of greater than 180 degrees viewing range.

FIG. 31 is a schematic diagram illustrating a light path of a light source in the lens depicted in FIG. 26, and only a representative portion of the light path is described hereafter. For ease of describing the light path depicted in FIG. 31, FIGs. 32-34 respectively illustrate different portions of the light path depicted in FIG. 31. Referring to FIGs. 30-34 concurrently, in the present embodiment, the accommodating space 512 is a portion of a ball body, and the light source 230 is located on the central axis C1.

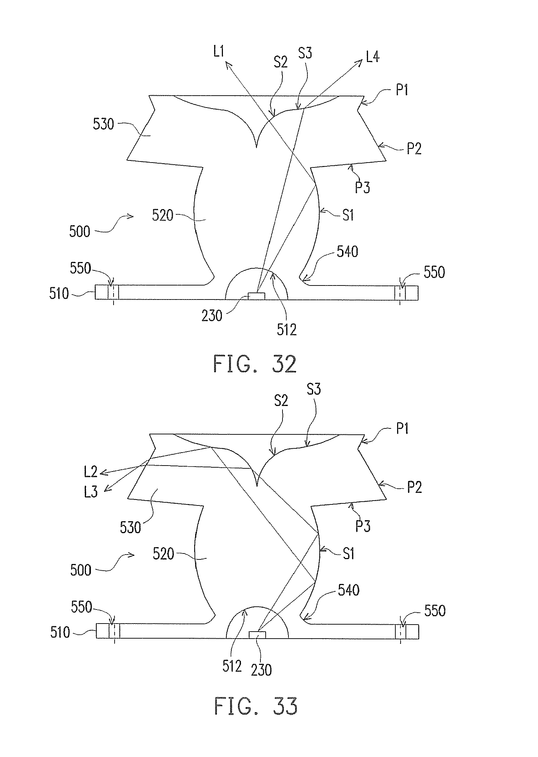

In addition, the first curved surface S1 is a total internal reflection (TIR) surface used for reflecting light from the light source 230 towards the umbrella-shaped body 530, as shown by a light L1 depicted in FIG. 32 as well as a light L2 and a light L3 depicted in FIG. 33. A light originating from the accommodating space 512 and emitted towards the first curved surface S1 is reflected by the first curved surface S1 and directed towards the umbrella-shaped body 530. Accordingly, the pillar 520 of the lens 500 is capable of collecting light towards the umbrella-shaped body 530.

In the present embodiment, on a projection plane P4 with the central axis C1 serving as a normal, an orthogonal projection of the third surface S2 onto the projection plane P4 is surrounded by an orthogonal projection of the fourth surface S3 onto the projection plane P4. In other words, on the umbrella-shaped body 530 of the lens 500, the third surface S2 is substantially surrounded by the fourth surface S3.

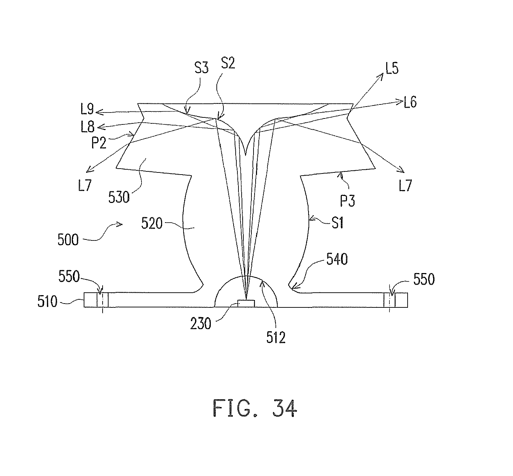

It should be noted that, a portion of a light emitted to the third surface S2 transmits through the third surface S2, as shown by the light L1 depicted in FIG. 32 and the light L2 depicted in FIG. 33. At this moment, another portion of the light emitted to the third surface S2 is reflected by the third surface S2 towards a side edge of the umbrella-shaped body 530, as shown by the light L2 depicted in FIG. 33 as well as a light L5, a light L7, and a light L8 depicted in FIG. 34. Herein, the light L2 transmits through a side of the third surface S2 towards another side thereof, then the light L2 is emitted towards the side edge of the umbrella-shaped body 530.

Moreover, a portion of the light emitted to the third surface S2 is first emitted towards the fourth surface S3, then reflected towards a side edge of the umbrella-shaped body 530, as shown by a light L6 and a light L9 depicted in FIG. 34.

Similarly, a portion of a light emitted to the fourth surface S3 transmits through the fourth surface S3, as shown by a light L4 depicted in FIG. 32. Another portion of the light emitted to the fourth surface S3 is reflected towards a side edge of the umbrella-shaped body 530, as shown by the light L3 depicted in FIG. 33 as well as the light L6 and the light L9 depicted in FIG. 34.

Therefore, the second and third surfaces S2 and S3 according to the present embodiment simultaneously possess capabilities for allowing light to transmit and reflect. Not only can a portion of light emit out of the lens 500 through the top portion of the umbrella-shaped body 530, but concurrently another portion of light may be guided towards the side edges of the umbrella-shaped body 530. In the present embodiment, the third surface is a convex surface, whereas the third surface is a concave surface. However, the present embodiment is not limited thereto. In another modification of the invention (not illustrated), the third surface may be a convex surface, and a designer may adjust the curved surfaces according to the light emitted from the accommodating space 512 and the pillar 520.

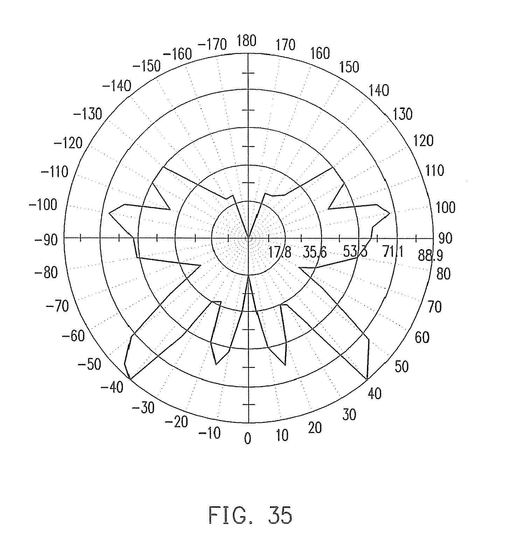

Referring again to FIGs. 30 and 31, at a side edge of the umbrella-shaped body 530, the first slanted surface P1 is located next to the fourth surface S3, and the second slanted surface P2 is located between the first slanted surface P1 and the first curved surface S1. Moreover, the included angle T1 is formed between the first slanted surface P1 and the second slanted surface P2. Accordingly, the first and second slanted surfaces P1 and P2 are capable of uniformly emitting light from the second and third surfaces S2 and S3 out towards the side edges of the lens 500. FIG. 35 is an illuminance distribution diagram generated by a light source through the lens depicted in FIG. 31, in which a radial coordinate has units of luminous intensity, and an arc coordinate represents an angular range of the light emission generated by the light source through the lens. Please refer to FIGs. 31 and 35 together.

The light emission effects generated by each of the optical paths depicted in FIG. 31 can be illustrated in FIG. 35. More specifically, after the first curved surface S 1 of the pillar 520 collects the light emitted from the accommodating space 512 of the base 510, light may be uniformly emitted out of the lens 500 through the third surface S2, the fourth surface S3, the first slanted surface P1, and the second slanted surface P2 of the umbrella-shaped body 530, and an emission range is greater than 180 degrees.

Additionally, referring again to FIGs. 29 and 30, the umbrella-shaped body 530 further includes a third slanted surface P3 surrounding the central axis C1 symmetrically and located between the first curved surface S1 and the second slanted surface P2. In the present embodiment, the third slanted surface P3 and the projection plane P4 form an acute angle T2, and a range of the acute angle T2 is 0 degree to 15 degrees. The acute angle T2 is used as a draft angle of the lens 500, in order to facilitate separation of a molded product and a mold after the lens 500 has been plastic injection molded. Additionally, referring again to FIGs. 26 and 30, the lens 500 further includes a bent surface 540 surrounding the central axis C1 symmetrically and located between the first curved surface S1 of the pillar 520 and the base 510. The bent surface 540 is fabricated to facilitate separation with the mold after the lens 500 is plastic molded.

Furthermore, referring again to FIGs. 26 and 27, in the present embodiment, the lens 500 further includes two fixing holes 550 located on the base 510, configured to facilitate a fixing member (not illustrated) fixing the lens 500 on a platform (not illustrated). Moreover, the fixing holes 550 may also be alternatively designed to form an adhesive portion of the lens 500, or a bottom portion of the base 510 may serve as the adhesive portion of the lens 500 (e.g., a base 610 of a lens 600 depicted in FIG. 28 and 29). The bases 510 and 610 of the lens 500 and 600 can accordingly be attached on a platform (not illustrated). However, the present embodiment does not limit the installation manner of the lens 500.

In light of the foregoing, the lens of the invention has the simple look and is easy to make, and thus the manufacturing costs of the lens are rather low. Moreover, when the lens and the directional LED light source are both applied, the range of the viewing angle of the LED light source can be enlarged. As such, the LED light source can be used in the decorative lamp and can be extensively applied.

It will be apparent to those skilled in the art that various modifications and variations can be made to the structure of the disclosed embodiments without departing from the scope or spirit of the disclosure. In view of the foregoing, it is intended that the disclosure cover modifications and variations of this disclosure provided they fall within the scope of the following claims and their equivalents.

## Claims

1. A lens (100, 100', 300, 400, 500, 600), wherein a light emitting diode light source (230) is adapted to be disposed therein, the lens (100, 100', 300, 400, 500, 600) comprising a central axis (C1), a first surface (130, 310, S1) and a second surface (302), wherein the first surface (130, 310, S1) surrounds the central axis (C1) symmetrically, and the second surface (302) is located inner of the first surface (130, 310, S1) and formed an accommodating space (S, R, 512) adapted to dispose the light emitting diode light source (230) therein.

2. The lens as claimed in claim 1, further comprises a third surface (140) located above the second surface and surrounded by the first surface (130, 310, S1).

3. The lens as claimed in claim 1, wherein the first surface (130, 310, S1) and the third surface (140) are concave surfaces, the second surface comprises a first subsurface (110) and a second subsurafce (120), the first subsurface (110) has a center where the central axis (C1) passing through, and the second subsurface (120) surrounds first subsurface (110) symmetrically as if the central axis (C1) serving an axle to conformally form the accommodating space (S).

4. The lens as claimed in claim 3, wherein the first surface (130) has a refractive portion and a total reflective portion, the refractive portion is relatively close to the second surface and the total reflective portion is relatively close to the third surface (140).

5. The lens as claimed in claim 2, wherein the third surface (308) is a plane, the second surface has a first subsurface (302), a second subsurface (304) and a third subsurface (306) conformally form the accommodating space (R), the second subsurface surrounds (304) outer of the first subsurface (302) and the third subsurface (306) surrounds outer of the second subsurface (304).

6. The lens as claimed in claim 5, wherein the first subsurface (302) is a concave surface, and the second subsurface (304) surrounding the first subsurface is a flat plane or an inclined plane.

7. The lens as claimed in claim 5, wherein the first surface (310) has a fourth subsurface (314) and a fifth subsurface (312), the fourth subsurface (314) is close to and surrounds the third surface (306) while the fifth subsurface (312) is close to the second surface (304).

8. The lens as claimed in claim 1, further comprises an umbrella-shaped body (530) disposed above the first surface (S1) and having a third surface (S2) and a fourth surface (S3) surrounding the central axis (C1) symmetrically, wherein the third surface (S2) and the fourth surface (S3) are located on a top portion of the umbrella-shaped body (530) and connect with each other.

9. The lens as claimed in claim 8, wherein on a projection plane (P4) with the central axis (C1) serving as a normal, an orthogonal projection of the third surface (S2) onto the projection plane (P4) is surrounded by an orthogonal projection of the fourth surface (S3) onto the projection plane.

10. The lens as claimed in claim 8, wherein the third surface (S2) is a convex surface or a concave surface, and the fourth surface (S3) is a convex surface or a concave surface.

11. The lens as claimed in claim 8, wherein a portion of a light emitted to the third surface (S2) transmits through the third surface (S2), and another portion of the light emitted to the third surface (S2) is reflected by the third surface (S2) towards a side edge of the umbrella-shaped body (530).

12. The lens as claimed in claim 8, wherein a portion of a light emitted to the fourth surface (S3) transmits through the fourth surface (S3), and another portion of the light emitted to the fourth surface (S3) is reflected by the fourth surface (S3) towards a side edge of the umbrella-shaped body (530).

13. The lens as claimed in claim 8, wherein the umbrella-shaped body (530) further comprises a first slanted surface (P1) and a second slanted surface (P2) surrounding the central axis (C1) symmetrically and respectively located at a side edge of the umbrella-shaped body (530), the first slanted surface (P1) located next to the fourth surface (S3), the second slanted surface (P2) located between the first slanted surface (P1) and the first surface (S1), and the first slanted surface (P1) intersects with the second slanted surface (P2) to form an included angle.

14. The lens as claimed in claim 9, wherein the umbrella-shaped body (530) further comprises a third slanted surface (P3) surrounding the central axis (C1) symmetrically and located on a bottom portion of the umbrella-shaped body (530), and the third slanted surface (P3) and the projection plane (P4) form an acute angle of 0 degree to 15 degrees.

15. The lens as claimed in claim 8, wherein the second surface is dome-like.

16. The lens as claimed in claim 1, wherein at least one of the first surface (130, 310, S1) and the second surface (302) further has a micro-structure configured to adjust a path of light.

17. The lens as claimed in claim 1, further comprising a plurality of fixing portions (150, 150') connected to a bottom edge of the first surface (130).
